# EUROPEAN PATENT APPLICATION

(11) **EP 2 650 708 A1**
(43) Date of publication of application: **16.10.2013**
(21) Application number: 13163474.3
(22) Date of filing: 12.04.2013
(51) Int. Cl.: G02B 6/028, G02B 6/036

(54) **Optical fiber**

(30) Priority: 12.04.2012 JP 2012091105
(71) Applicant: Shin-Etsu Chemical Co., Ltd., Chiyoda-ku, Tokyo 100-0004 (JP)
(72) Inventor: Oyamada, Hiroshi, Gunma, Gunma 379-0127 (JP); Inoue, Dai, Ibaraki, Ibaraki 314-0102 (JP)
(74) Representative: Storz, Ulrich

(57) **Abstract**

In order to decrease transmission loss caused by Rayleigh scattering in an optical fiber, without negatively affecting the curvature loss, provided is an optical fiber comprising a core at a center thereof, a low refractive index layer that is adjacent to the core and covers an outer circumference of the core, and a cladding that is adjacent to the low refractive index layer and covers an outer circumference of the low refractive index layer, wherein a refractive index of the core is higher than a refractive index of the cladding, a refractive index of the low refractive index layer is lower than the refractive index of the cladding, and the refractive index of the low refractive index layer decreases in a direction from an inner portion of the low refractive index layer to an outer portion of the low refractive index layer.

## Description

### BACKGROUND

### 1. TECHNICAL FIELD

The present invention relates to an optical fiber used for optical communication, and in particular to an optical fiber suitable for use as wiring of long distance lines for transmission over a length of tens of kilometers and as wiring in an optical fiber to the home (FTTH) or local area network (LAN) inside or outside of the home.

### 2. RELATED ART

Optical fiber is used in the field of long-distance communication, due to its bandwidth characteristics, and is widely used in communication via long-distance backbone cables with lengths of tens of kilometers or more. On the other hand, the amount of information exchanged between individual personal computers has increased drastically due to the quick spreading of the Internet. The communication paths that have become widely used are copper wire electrical cables, such as coaxial cables and unshielded twisted pair (UTP) cables. However, electrical cables have narrow bandwidth and are easily affected by electromagnetic noise, and it is therefore difficult to transfer a large amount of information through the electrical cables. Accordingly, optical fiber is used not only for long distance communication between phone stations, but also for communication between phone stations and each user. Here, FTTH has become widely used as a technique for increasing the transmission capacity.

The FTTH system utilizes the wideband characteristic of optical fiber to share a single optical fiber among a plurality of users at a point near a user group. After this, optical signals are branched to each user and optical fiber drop wires are distributed to each user. Curvature loss is one important characteristic that is desired for optical fiber within home wiring or drop lines. While a long distance backbone cable is arranged in a location that is not easily affected by outside forces, e.g. in an underground duct, optical fibers inside and outside of a home are usually formed as relatively thin cords, e.g. cords with a radius of several millimeters. Therefore, although the optical fiber can bend and is light-weight, the optical fiber is easily affected by outside forces and often experiences a curvature radius of 20 mm or less. The optical fiber propagates the signal light through the core of the optical fiber. Therefore, transmission is still possible when the optical fiber is in a curved state. However, when the curvature radius is smaller, the ratio of light that leaks out of the core without being propagated increases exponentially, resulting in transmission loss. This is referred to as "curvature loss."

As a single mode optical fiber that is used in the above manner, there is a display-type optical fiber that can decrease the curvature loss while allowing for a design with high MFD, by providing a low refractive index layer outside of the core, as described in "Characteristics of a Doubly Clad Optical Fiber with a Low-Index Inner Cladding," by Shojiro Kawakami and Shigeo Nishida, IEEE Journal of Quantum Electronics, vol. QE-10, no. 12, pp. 879-887, December, 1974. Furthermore, Japanese Patent Application Publication No. 2002-47027 describes an optical fiber with such a configuration that decreases absorption loss caused by impurities and achieves an optimal zero-scattering wavelength. This optical fiber is designed such that the relative refractive index difference Δ of the low refractive index cladding is approximately from -0.021% to -0.0007% and the MFD is approximately 9.2 µm. Japanese Patent Application Publication No. 2006-133496 describes an optical fiber with further improvement of the curvature characteristics. This optical fiber is designed such that the relative refractive index difference Δ of the low refractive index cladding has an even lower value of approximately -0.08% to -0.02% and the MFD is a slightly smaller value of approximately 8.2 to 9.0 µm.

In the case of a silica glass optical fiber, in general, the refractive index is increased by doping with germanium and is lowered by doping with fluorine. Conventionally, the core is doped with both germanium and fluorine. One of the reasons for this is that, depending on manufacturing limitations, when thermally processing a porous body in a gaseous environment containing fluorine, the fluorine scatters to also become implanted in the core portion that contains germanium. Another reason is that, when forming the refractive index distribution, in order to perform fine adjustments in this refractive index distribution, doping with both elements is performed at the same time to facilitate the designing of an optical fiber that has the desired glass refractive index.

On the other hand, the majority of transmission loss in an optical fiber from which sufficient impurities have been removed is caused by Rayleigh scattering loss. Rayleigh scattering loss is caused by shaking of the glass component in the portion that propagates the light, which is centered on the core of the optical fiber. Therefore, the Rayleigh scattering loss increases as the dopant amount included in the core increases, and this causes an increase in transmission loss. Accordingly, in a conventional optical fiber, the total amount of dopants, which are the germanium and fluorine, implanted in the core is increased, and this makes it difficult to obtain an optical fiber with low loss.

In light of the prior art described above, it is an objective of the present invention to provide an optical fiber that decreases transmission loss caused by Rayleigh scattering in the optical fiber, without negatively affecting the curvature loss.

### SUMMARY

According to a first aspect of the present invention, provided is an optical fiber comprising a core at a center thereof, a low refractive index layer that is adjacent to the core and covers an outer circumference of the core, and a cladding that is adjacent to the low refractive index layer and covers an outer circumference of the low refractive index layer, wherein a refractive index of the core is higher than a refractive index of the cladding, a refractive index of the low refractive index layer is lower than the refractive index of the cladding, and the refractive index of the low refractive index layer decreases in a direction from an inner portion of the low refractive index layer to an outer portion of the low refractive index layer.

The summary clause does not necessarily describe all necessary features of the embodiments of the present invention. The present invention may also be a subcombination of the features described above.

### BRIEF DESCRIPTION OF THE DRAWINGS

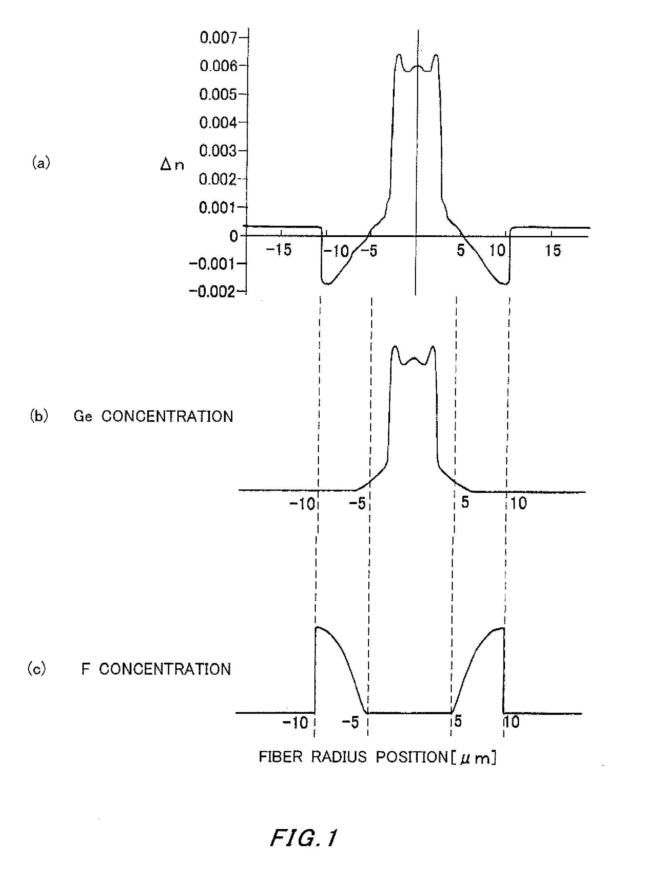

Fig. 1 shows three graphs, among which Graph (a) is a profile indicating the refractive index difference of an optical fiber preform obtained as a first embodiment, Graph (b) shows a Ge concentration distribution at positions in the radial direction in the profile, and Graph (c) shows a F concentration distribution at positions in the radial direction in the profile.

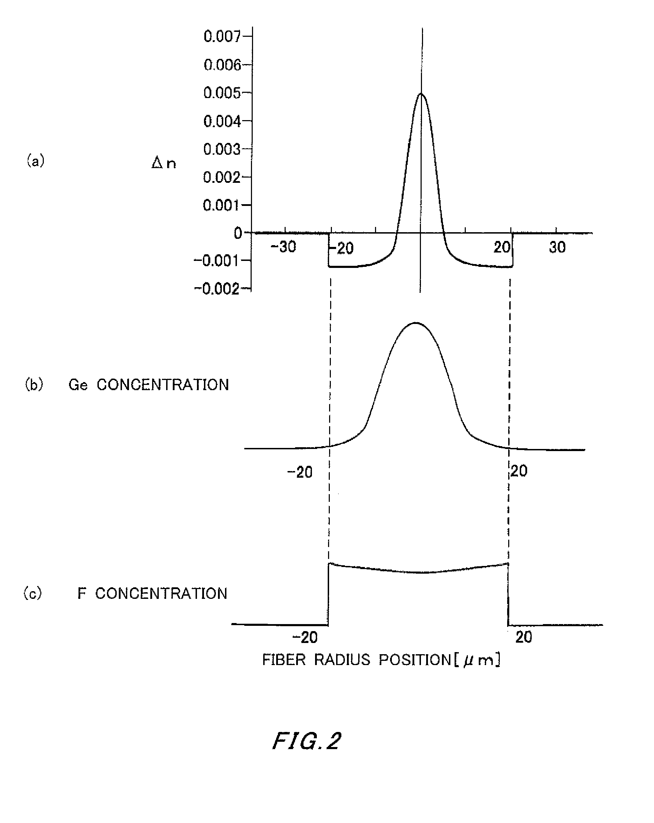

Fig. 2 shows three graphs, among which Graph (a) is a profile indicating the refractive index difference of an optical fiber preform obtained as a first comparative example, Graph (b) shows a Ge concentration distribution at positions in the radial direction in the profile, and Graph (c) shows a F concentration distribution at positions in the radial direction in the profile.

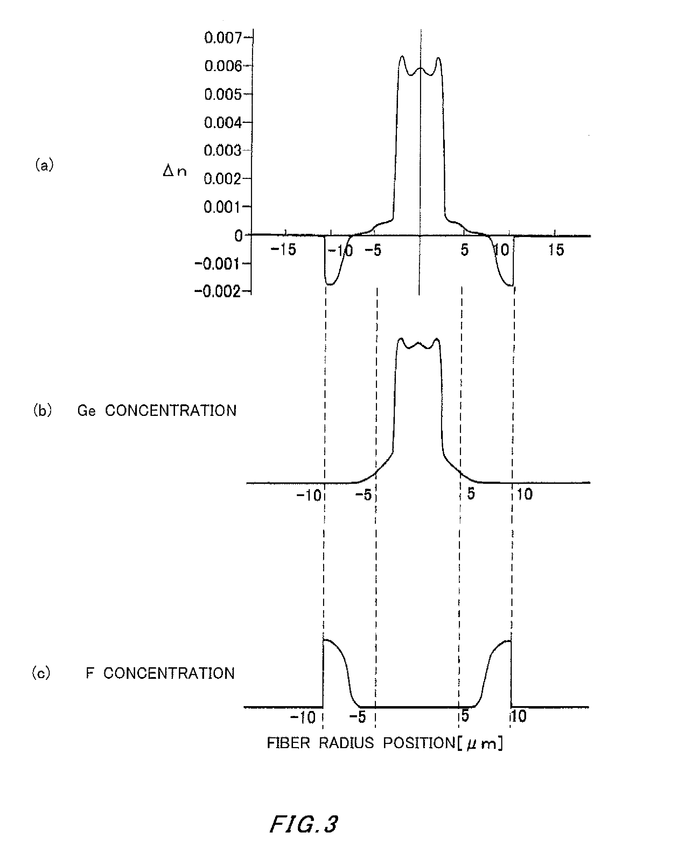

Fig. 3 shows three graphs, among which Graph (a) is a profile indicating the refractive index difference of an optical fiber preform obtained as a second embodiment, Graph (b) shows a Ge concentration distribution at positions in the radial direction in the profile, and Graph (c) shows a F concentration distribution at positions in the radial direction in the profile.

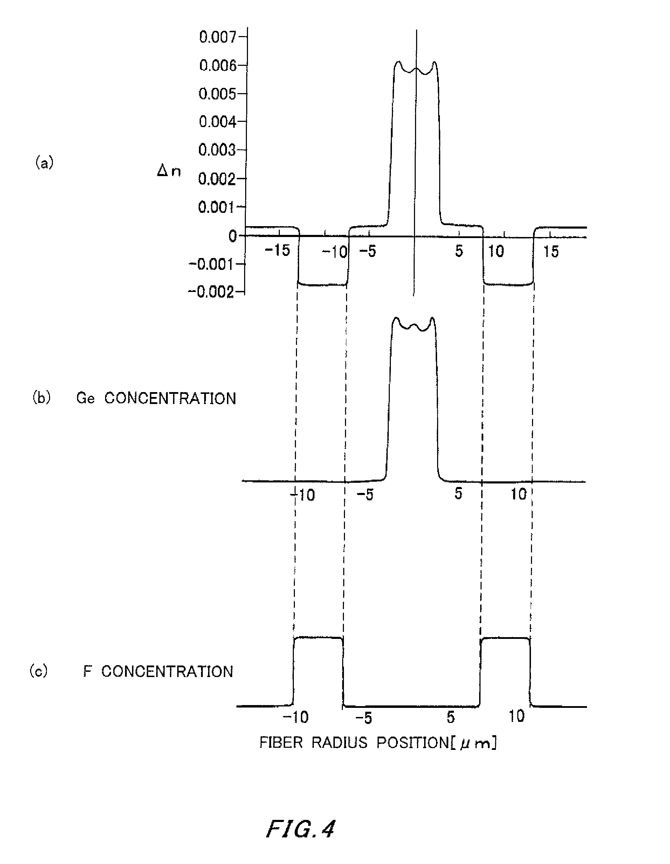

Fig. 4 shows three graphs, among which Graph (a) is a profile indicating the refractive index difference of an optical fiber preform obtained as a second comparative example, Graph (b) shows a Ge concentration distribution at positions in the radial direction in the profile, and Graph (c) shows a F concentration distribution at positions in the radial direction in the profile.

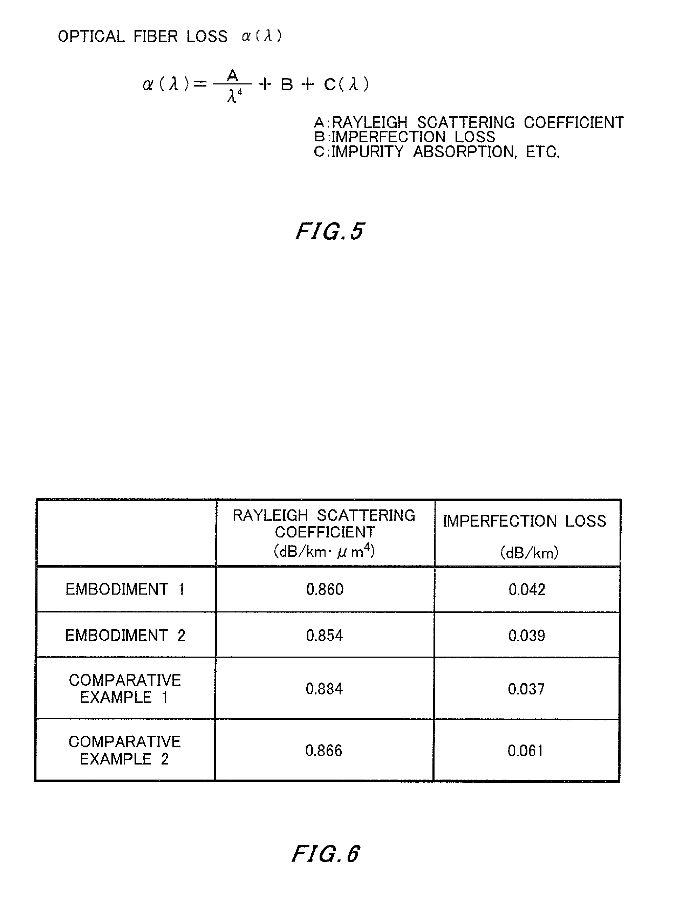

Fig. 5 shows an expression of the loss α(λ) in optical fiber.
Fig. 6 is a table showing the Rayleigh scattering coefficient and imperfection of the optical fibers obtained from the first and second embodiments and first and second comparative examples.

### DESCRIPTION OF EXEMPLARY EMBODIMENTS

### (First Embodiment)

A conventional method was used to form an optical fiber preform with the profile shown in Graph (a) of Fig. 1. This conventional method may be a combination of a plurality of deposition techniques including VAD, OVD, PCVD, and jacketing techniques. As an exemplary adjustment of the dopant concentration, Graph (b) in Fig. 1 shows the germanium concentration distribution at radial positions from the center of the core, and Graph (c) in Fig. 1 shows the fluorine concentration distribution corresponding to the radial position. According to the profile of Graph (a) in Fig. 1, outside of the core, the refractive index decreases at a substantially constant slope while moving outward.

Fig. 5 shows an Expression for loss α(λ) of optical fiber. The optical fiber loss α(λ) can be expressed by a Rayleigh scattering coefficient A, imperfection loss B, and impurity absorption C, as shown in Fig. 5, for example. The optical fiber obtained by drawing the optical fiber preform having the profile shown in Graph (a) of Fig. 1 exhibited low losses of 0.334 dB/km at a usage wavelength of 1310 nm and 0.191 dB/km at another usage wavelength of 1550 nm.

Fig. 6 is a table showing the Rayleigh scattering coefficients and imperfection losses of optical fibers obtained as first and second embodiments and as first and second comparative examples. As shown in Fig. 6, the optical fiber of the first embodiment has a Rayleigh scattering coefficient of 0.860 dB/km·µm⁴ and imperfection loss of 0.042 dB/km, which indicate that the Rayleigh scattering coefficient and imperfection loss are kept low.

### (First Comparative Example)

As the first comparative example, the same method as used in the first embodiment is used to manufacture an optical fiber preform having, as doping concentrations, the germanium concentration distribution shown in Graph (b) of Fig. 2 and the fluorine concentration distribution shown in Graph (c) of Fig. 2. The resulting profile is shown in Graph (a) of Fig. 2. The optical fiber obtained by drawing this preform exhibited low losses of 0.337 dB/km at a usage wavelength of 1310 nm and 0.190 dB/km at another usage wavelength of 1550 nm. However, as shown in Fig. 6, when the Rayleigh scattering coefficient of the optical fiber of the first comparative example was measured, the value was found to be 0.884 dB/km·µm⁴, which is higher than that of the first embodiment.

### (Second Embodiment)

As another embodiment, the same conventional method as used in the first embodiment was used to manufacture an optical fiber preform having, as doping concentrations, the germanium concentration distribution shown in Graph (b) of Fig. 3 and the fluorine concentration distribution shown in Graph (c) of Fig. 3. The resulting profile is shown in Graph (a) of Fig. 3. According to the profile shown in Graph (a) of Fig. 3, outside of the core, the refractive index decreases in an outward direction, and decreases with a lower slope nearer the core and a steeper slope farther away from the core. The optical fiber obtained by drawing this preform exhibited low losses of 0.329 dB/km at a usage wavelength of 1310 nm and 0.187 dB/km at another usage wavelength of 1550 nm. Furthermore, as shown in Fig. 6, the optical fiber of the second embodiment has a Rayleigh scattering coefficient of 0.854 dB/km·µm⁴ and imperfection loss of 0.039 dB/km, which indicate that the Rayleigh scattering coefficient and imperfection loss are kept low and that the optical fiber has a high restrictive effect.

As the second comparative example, the same method as used in the first embodiment is used to manufacture an optical fiber preform having, as doping concentrations, the germanium concentration distribution shown in Graph (b) of Fig. 4 and the fluorine concentration distribution shown in Graph (c) of Fig. 4. The resulting profile is shown in Graph (a) of Fig. 4. According to the profile shown in Graph (a) of Fig. 4, the refractive index exhibits a steep slope both near the core and far from the core, and there is a low refractive index layer that is almost flat. The optical fiber obtained by drawing this preform exhibited high losses of 0.355 dB/km at a usage wavelength of 1310 nm and 0.211 dB/km at another usage wavelength of 1550 nm.

As shown in Fig. 6, when the Rayleigh scattering coefficient of the optical fiber of the second comparative example was measured, the value was found to be 0.866 dB/km·µm⁴, which is lower than that of the first comparative example. On the other hand, the imperfection loss is 0.061 dB/km, which is approximately 1.5 times higher than that of the other embodiments and comparative example. When there is a sudden change in the refractive index near the core in this manner, there is a large difference in the glass characteristics due to the sudden change in the dopant amount, and this is believed to cause the increase in the imperfection loss.

In this way, as the result of diligent research, the inventors found that the Rayleigh scattering can be restricted without incurring curvature loss. In other words, the optical power propagating through the optical fiber is not only in the core, but has a distribution in which a portion of the power is also propagated in the low refractive index layer outside of the core. The structure of the optical fiber is such that the dopant amount is lower closer to the inner side of the low refractive index layer in which a large amount of optical power is distributed, and therefore the Rayleigh scattering can be restricted.

Specifically, the optical fiber of the first and second embodiments is formed by a core at a center thereof, a low refractive index layer adjacent to the core and covering the outer circumference of the core, and a cladding adjacent to the low refractive index layer and covering the outer circumference of the low refractive index layer. In the optical fiber of the first and second embodiment, the refractive index of the core is higher than that of the cladding, the refractive index of the low refractive index layer is lower than that of the cladding, and the refractive index of the low refractive index layer decreases in a direction from the inner portion to the outer portion thereof Furthermore, with n₁ representing the maximum refractive index of the core, n₂ representing the minimum refractive index of the low refractive index layer, and n₃ representing the average refractive index of the cladding, the refractive index at the boundary portion between the innermost portion of the low refractive index layer and the core is n₃, and the refractive index at the boundary portion between the outermost portion of the low refractive index layer and the cladding is n₂.

Furthermore, in the case of a conventional optical fiber, the total dopant amount of the fluorine and germanium implanted in the core ultimately increases, and it is difficult to obtain an optical fiber that has innately low loss. In the optical fiber that solves this problem, an element for achieving a high refractive index is used for doping the core and an element for achieving a low refractive index is used for doping the low refractive index layer. The core does not substantially include the element for achieving a low refractive index, and the low refractive index layer does not substantially include the element for achieving a high refractive index. Furthermore, the cladding does not substantially include the element for achieving a low refractive index and does not substantially include the element with the high refractive index. By adopting this structure, the total dopant amount can be restricted, thereby restricting the Rayleigh scattering.

In the optical fiber of the first and second embodiments, the amount of the element for achieving a low refractive index implanted in the low refractive index layer increases in a direction from the inner portion of the low refractive index layer to the outer portion, is substantially zero at the boundary portion between the innermost portion of the low refractive index layer and the core, and is at a maximum at the boundary portion between the outermost portion of the low refractive index layer and the cladding. With this structure, a difference in glass characteristics caused by a sudden change in the dopant amount can be restricted, thereby restricting the imperfection loss.

Furthermore, the amount of the element for achieving a high refractive index implanted in the core is substantially zero at the boundary portion between the outermost portion of the core and the low refractive index layer. The element for achieving a high refractive index is germanium, and the element for achieving a low refractive index is fluorine. Furthermore, the transmission loss for a wavelength of 1550 nm is no greater than 0.19 dB/km, and the transmission loss increase is no greater than 0.5 dB/km when the optical fiber is wound around a mandrel with a diameter of 20 mm. Furthermore, the transmission loss at a wavelength of 1383 nm is no greater than 0.35 dB/km.

The optical power propagated through the optical fiber is distributed to be not only in the core, but also partly in the low refractive index layer outside of the core. In the optical fiber of the first and second embodiment, the dopant amount is lower near the inner region of the low refractive index layer where a large amount of optical power is distributed, and therefore the Rayleigh scattering can be restricted without incurring curvature loss. Furthermore, the dopant amount in the core, low refractive index layer, and cladding can be restricted without changing the shape of the refractive index distribution, and the Rayleigh scattering can be restricted without incurring curvature loss.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

## Claims

1. An optical fiber comprising a core at a center thereof, a low refractive index layer that is adjacent to the core and covers an outer circumference of the core, and a cladding that is adjacent to the low refractive index layer and covers an outer circumference of the low refractive index layer, wherein
a refractive index of the core is higher than a refractive index of the cladding,
a refractive index of the low refractive index layer is lower than the refractive index of the cladding, and
the refractive index of the low refractive index layer decreases in a direction from an inner portion of the low refractive index layer to an outer portion of the low refractive index layer.

2. The optical fiber according to Claim 1, wherein
with n₁ representing a maximum refractive index of the core and n₃ representing an average refractive index of the cladding, a refractive index at a boundary portion between an innermost portion of the low refractive index layer and the core is n₃.

3. The optical fiber according to Claim 1 or 2, wherein
with n₁ representing a maximum refractive index of the core and n₂ representing a minimum refractive index of the low refractive index layer, a refractive index at a boundary portion between an outermost portion of the low refractive index layer and the cladding is n₂.

4. The optical fiber according to any one of Claims 1 to 3, wherein
the optical fiber is formed primarily of silica,
the core is doped with an element for achieving a high refractive index,
the low refractive index layer is doped with an element for achieving a low refractive index, and
the core does not substantially include the element for achieving the low refractive index.

5. The optical fiber according to any one of Claims 1 to 4, wherein
the optical fiber is formed primarily of silica,
the core is doped with an element for achieving a high refractive index,
the low refractive index layer is doped with an element for achieving a low refractive index, and
the low refractive index layer does not substantially include the element for achieving the high refractive index.

6. The optical fiber according to any one of Claims 1 to 5, wherein
the optical fiber is formed primarily of silica,
the core is doped with an element for achieving a high refractive index,
the low refractive index layer is doped with an element for achieving a low refractive index, and
the cladding does not substantially include the element for achieving the high refractive index and does not substantially include the element for achieving the low refractive index.

7. The optical fiber according to any one of Claims 4 to 6, wherein
the amount of the element for achieving the low refractive index implanted in the low refractive index layer increases in a direction from the inner portion of the low refractive index layer to the outer portion of the low refractive index layer.

8. The optical fiber according to any one of Claims 4 to 7, wherein
the amount of the element for achieving the low refractive index implanted in the low refractive index layer is substantially zero at a boundary portion between an innermost portion of the low refractive index layer and the core.

9. The optical fiber according to any one of Claims 4 to 8, wherein
the amount of the element for achieving the low refractive index implanted in the low refractive index layer is at a maximum at a boundary portion between an outermost portion of the low refractive index layer and the cladding.

10. The optical fiber according to any one of Claims 4 to 9, wherein
the amount of the element for achieving the high refractive index implanted in the core is substantially zero at a boundary portion between an outermost portion of the core and the low refractive index layer.

11. The optical fiber according to any one of Claims 4 to 10, wherein
the element for achieving the high refractive index is germanium.

12. The optical fiber according to any one of Claims 4 to 1 l, wherein the element for achieving the low refractive index is fluorine.

13. The optical fiber according to any one of Claims 1 to 12, wherein transmission loss at a wavelength of 1550 nm is no greater than 0.19 dB/km.

14. The optical fiber according to any one of Claims 1 to 13, wherein transmission loss increase at a wavelength of 1550 nm when the optical fiber is wound around a mandrel with a diameter of 20 mm is no greater than 0.5 dB/km.

15. The optical fiber according to any one of Claims 1 to 14, wherein transmission loss at a wavelength of 1383 nm is no greater than 0.35 dB/km.
